# EUROPEAN PATENT SPECIFICATION

(11) **EP 3 635 239 B1**
(45) Date of publication and mention of the grant of the patent: **24.11.2021**
(21) Application number: 17733487.7
(22) Date of filing: 09.06.2017
(51) Int. Cl.: F02M 55/00, F01M 11/02, F02N 9/04, B60K 15/01, F01P 11/04

(54) **FLUID DISTRIBUTION ELEMENT**
FLUIDVERTEILUNGSELEMENT
ÉLÉMENT DE DISTRIBUTION DE FLUIDE

(43) Date of publication of application: 15.04.2020
(73) Proprietor: Wärtsilä Finland Oy, 65100 Vaasa (FI)
(72) Inventor: HÄGGBLOM, Daniel, 65100 Vaasa (FI)
(74) Representative: Berggren Oy
(86) International application number: PCT/FI2017/050426
(87) International publication number: WO 2018/224721

(56) References cited:
- EP-A2- 2 050 953
- DE-A1- 2 055 902
- DE-B- 1 041 292
- JP-A- 2002 310 036

## Description

### Technical field of the invention

The present invention relates to a fluid distribution element in accordance with claim 1.

### Background of the invention

Large internal combustion engines, such as ship and power plant engines, comprise a large number of different fluid circuits for different purposes. For instance, a lube oil circuit is needed for circulating lubricating oil to various components of the engine, pressurized air is needed for starting the engine, excessive and leaking fuel needs to be collected from fuel injectors and hydraulic fluid is needed for operating variable valve timing. Installation of all the pipes needed for different fluid circuits is time consuming. In addition, a certain engine type is often provided in different cylinder configurations. Different fluid systems are thus needed for engines with different number of cylinders. DE 20 55 902 A1 discloses a fluid distribution element for an internal combustion engine.

### Summary of the invention

An object of the present invention is to provide a fluid distribution element for an internal combustion engine. The characterizing features of the fluid distribution element according to the invention are given in claim 1.

The fluid distribution element according to the invention is made of a casting and comprises at least two fluid channels from the following group:
- air channel for starting air or for an air assist system,
- water channel for introducing water into combustion chambers,
- fuel return channel for liquid fuel,
- VIC oil channel for hydraulic medium used for variable intake valve timing,
- fuel leakage channel for liquid fuel,
- VEC oil channel for hydraulic medium used for variable exhaust valve timing,
- lube oil channel.

The fluid distribution element further comprises a fluid connection from at least one of the fluid channels belonging to the group of air channel, water channel, fuel return channel, VIC oil channel, fuel leakage channel, VEC oil channel and lube oil channel to a cylinder head of an engine. The fluid distribution element thus allows assembly of at least two fluid channels from modules, which comprise connections to cylinder heads of an engine. Assembling of different fluid systems is thus quick. Because of the modular structure, same elements can be used in engines with different number of cylinders.

According to an embodiment of the invention, the fluid distribution element comprises as separate fluid channels each fluid channel from the following group:
- air channel for starting air or air assist system,
- fuel return channel for liquid fuel,
- VIC oil channel for hydraulic medium used for variable intake valve timing,
- fuel leakage channel for liquid fuel,
- VEC oil channel for hydraulic medium used for variable exhaust valve timing, and
- lube oil channel.

The fluid distribution element thus comprises at least six separate fluid channels. Most of the fluid channels needed for the operation of the engine can thus be integrated in the same module.

According to an embodiment of the invention, the fluid distribution element comprises a fluid connection from each of the fluid channels belonging to the group of air channel, fuel return channel, VIC oil channel, fuel leakage channel, VEC oil channel and lube oil channel to a cylinder head of an engine. All the fluid channels can thus be easily connected to a cylinder head.

According to the invention, the fluid distribution element has a first end surface and a second end surface, the first end surface being configured to be connected to a second end surface of an identical fluid distribution element and the second end surface being configured to be connected to a first end surface of another identical fluid distribution element. Each end surface can be provided with at least two openings, each of the openings forming an inlet or an outlet of a fluid channel. A plurality of fluid distribution elements can thus be connected to each other for forming longer fluid channels.

According to an embodiment of the invention, at least one of the fluid channels is provided with a branch for connecting the fluid channel to a cylinder head. The branch can be provided with an inlet or outlet opening to an upper surface of the fluid distribution element. The fluid distribution element can thus be arranged between an engine block and a cylinder head.

According to an embodiment of the invention, the fluid distribution element is configured to be attached to an engine block.

A piston engine according to the invention comprises a plurality of cylinders, each cylinder being provided with an own cylinder head, wherein each cylinder head of the engine is connected to a fluid distribution element defined above.

### Brief description of the drawings

Embodiments of the invention are described below in more detail with reference to the accompanying drawings, in which
Fig. 1 shows a fluid distribution element according to an embodiment of the invention,
Fig. 2 shows two fluid distribution elements and gaskets between the elements,
Fig. 3 shows a plurality of fluid distribution elements connected to cylinder heads,
Fig. 4 shows fluid distribution elements in connection with an engine block, and
Fig. 5 shows a fluid distribution element and a connecting block attached to the fluid distribution element.

### Description of embodiments of the invention

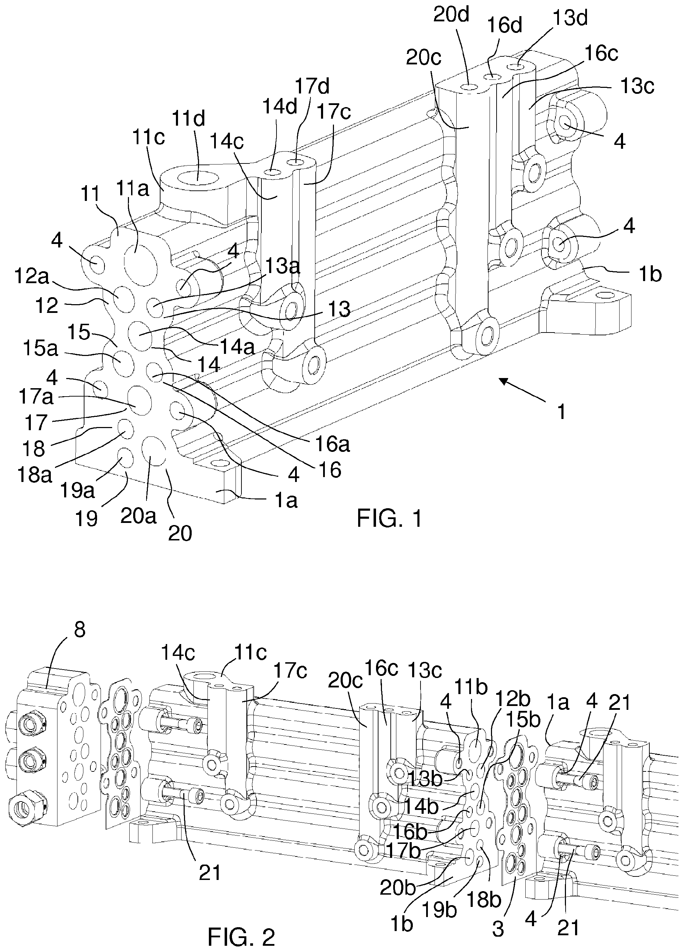

Figure 1 shows a fluid distribution element 1 according to an embodiment of the invention. The fluid distribution element 1 is a module comprising at least two fluid channels. The fluid distribution element 1 can be used in an internal combustion engine as a part of different fluid systems. The fluid channels of the fluid distribution element 1 can belong to the following group: return channel for liquid fuel, leakage channel for liquid fuel, lube oil channel, air channel for starting air or an air assist system, oil channel for variable intake valve timing, oil channel for variable exhaust valve timing and water channel for introducing water into combustion chambers. The fluid distribution element 1 can further comprise one or more fluid channels for other purposes, such as for control oil used in different systems of the engine. The engine where the fluid distribution element 1 is used can be a large internal combustion engine, such as a main or an auxiliary engine of a ship or an engine that is used at a power plant for producing electricity. The fluid distribution element comprises a fluid connection from at least one of the fluid channels to a cylinder head of an engine. The fluid distribution element 1 can be configured to be connectable to one cylinder head. The number of fluid distribution elements 1 used in an engine can thus correspond to the number of cylinders in the engine. This allows the same fluid distribution elements 1 to be used in different engine configurations.

In the embodiment of the figures, the fluid distribution element 1 comprises ten fluid channels 11, 12, 13, 14, 15, 16, 17, 18, 19, 20. However, depending on the engine where the fluid distribution element 1 is used, the number of the fluid channels could be different. The fluid distribution element 1 is an elongated part having a first end surface 1a and a second end surface 1b. The fluid channels 11, 12, 13, 14, 15, 16, 17, 18, 19, 20 run in the longitudinal direction of the fluid distribution element 1. The end surfaces 1a, 1b are perpendicular to the longitudinal direction of the fluid distribution element 1. The first end surface 1a of the fluid distribution element 1 is provided with openings 11a, 12a, 13a, 14a, 15a, 16a, 17a, 18a, 19a, 20a. The second end surface 1b of the fluid distribution element 1 is provided with similar openings 11b, 12b, 13b, 14b, 15b, 16b, 17b, 18b, 19b, 20b. Each opening 11a, 12a, 13a, 14a, 15a, 16a, 17a, 18a, 19a, 20a, 11b, 12b, 13b, 14b, 15b, 16b, 17b, 18b, 19b, 20b forms an inlet or an outlet of a fluid channel 11, 12, 13, 14, 15, 16, 17, 18, 19, 20. An inlet or an outlet of each fluid channel is arranged on one of the end surfaces 1a, 1b of the fluid distribution element 1. In the embodiment of the figures, both the inlet and the outlet of each fluid channel are arranged on the end surfaces 1a, 1b. Each fluid channel thus extends from the first end surface 1a of the fluid distribution element 1 to the second end surface 1b. However, it is also possible that either the inlet or the outlet of one or more fluid channels is arranged on some other surface of the fluid distribution element 1. It is also possible that one or more fluid channels comprise an additional inlet and/or outlet, which is arranged on some other surface.

In the embodiment of the figures, the fluid distribution element 1 comprises a first fluid channel 11. The first fluid channel 11 is an air channel that is configured to convey pressurized air, which is used as starting air of an engine. The starting air is introduced into the cylinders of the engine during start-up of the engine for moving the pistons and rotating the crankshaft of the engine. The air channel 11 can also be used as a part of an air-assist system, which introduces additional air into the cylinders for assisting combustion. The air-assist system can be used for example for addressing problems relating to turbo lag or at part loads.

In the embodiment of the figures, a second fluid channel 12 is a water channel, which can be used for introducing water into the combustion chambers. The water can be injected directly into the cylinders of the engine, into the intake duct or into an exhaust duct and further into the cylinders during exhaust gas recirculation.

A third fluid channel 13 is a fuel return channel for liquid fuel. Through the return channel 13, excessive fuel is returned into a fuel tank from fuel injectors.

A fourth fluid channel 14 is a VIC oil channel for variable intake valve timing (VIC). The VIC oil channel 14 can be used for introducing to a VIC system pressurized oil, which can be used for delaying closing of the intake valves.

A fifth fluid channel 15 is an extra channel, which can be used for engine-specific purposes.

A sixth fluid channel 16 is a fuel leakage channel for liquid fuel. The fuel leakage channel 16 collects leaking fuel from the fuel injectors.

A seventh fluid channel 17 is a VEC oil channel for variable exhaust valve timing (VEC). The VEC oil channel 17 can be used for introducing to a VEC system pressurized oil, which can be used for delaying closing of the exhaust valves or for opening the exhaust valves for exhaust gas recirculation.

An eight fluid channel 18 and a ninth fluid channel 19 can be used for control oil, which can be used in various systems of the engine for different control purposes.

A tenth fluid channel 20 is a lube oil channel, which is used for circulating lubricating oil to various components of the engine.

The fluid distribution element 1 could also comprise only some of the fluid channels 11, 12, 13, 14, 15, 16, 17, 18, 19, 20 listed above. In particular, the fluid distribution element 1 could comprise the air channel 11, fuel return channel 13, VIC oil channel 14, fuel leakage channel 16, VEC oil channel 17 and lube oil channel 20. However, the fluid distribution element 1 can be provided with fluid channels that are not needed in all engine types. The same fluid distribution element 1 can thus be used in different engines.

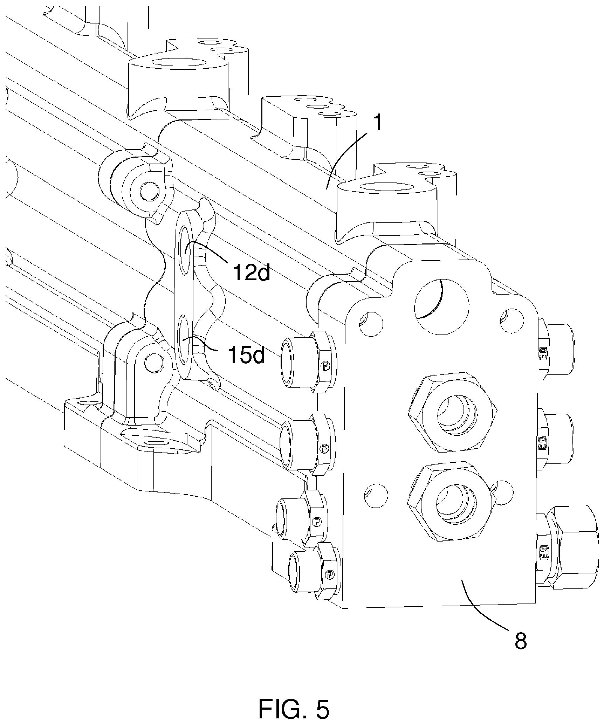

Some of the fluid channels can be provided with branches for connecting the fluid channels to cylinder heads of an engine. In the embodiment of the figures, each of the air channel 11, fuel return channel 13, VIC oil channel 14, fuel leakage channel 16, VEC oil channel 17 and lube oil channel 20 is provided with a branch 11c, 13c, 14c, 16c, 17c, 20c. The branches 11c, 13c, 14c, 16c, 17c, 20c are perpendicular to the fluid channels 11, 13, 14, 16, 17, 20 and extend to an upper surface of the fluid distribution element 1. Each branch 11c, 13c, 14c, 16c, 17c, 20c is provided with an inlet or outlet 11d, 13d, 14d, 16d, 17d, 20d arranged on the upper surface of the fluid distribution element 1. By arranging the inlets or outlets on the upper surface of the fluid distribution element 1, the fluid channels are easy to connect to a cylinder head. Preferably, outlets from such fluid channels that are needed in most engines are arranged on the upper surface of the fluid distribution element 1. If outlets from other fluid channels are needed, they can be arranged on a side of the fluid distribution element and connected to the cylinder head by means of separate pipes. Figure 5 shows outlets 12d, 15d from the water channel 12 and the extra fluid channel 15. The outlets 12d, 15d are arranged on a side surface of the fluid distribution element 1.

Figure 2 shows how two identical fluid distribution elements 1 are connected to each other. The first end surface 1a of one of the fluid distribution elements 1 is arranged against the second end surface 1b of the other fluid distribution element 1. A gasket 3 is arranged between the two end surfaces 1a, 1b. The ends of the fluid distribution elements 1 are provided with bolt holes 4 for allowing two fluid distribution elements 1 to be attached to each other by means of bolts 21. In the embodiment of the figures, each end of the fluid distribution element 1 is provided with four bolt holes 4. The bolt holes 4 are arranged on the sides of the fluid distribution elements 1.

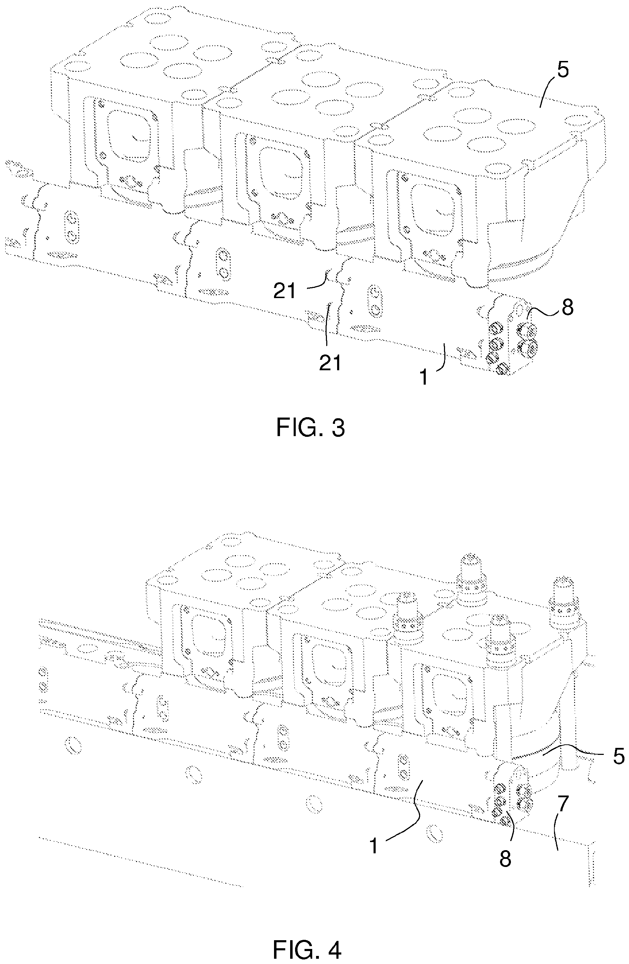

Figures 3 and 4 show how the fluid distribution element 1 can be connected to a cylinder head 5 of an engine. Figure 3 shows three cylinder heads 5 of an engine. Each cylinder of the engine is provided with an own cylinder head 5. Each fluid distribution element 1 is configured to be connected to one cylinder head 5. Each fluid distribution element 1 is arranged between an engine block 7 and a cylinder head 5. The fluid distribution element 1 has a lower surface, which is configured to be arranged against the engine block 7. The inlets or outlets 11d, 13d, 14d, 16d, 17d, 20d arranged on the upper surface of the fluid distribution element 1 are connected to the respective fluid channels of the cylinder head 5. The connections on the upper surface of the fluid distribution element 1 can be sealed for example by means of O-rings. Alternatively, a similar gasket as between two consecutive fluid distribution elements 1 can be used.

Figures 2 to 5 show a connecting block 8. The connecting block 8 is provided with connections for all the fluid channels 11, 12, 13, 14, 15, 16, 17, 18, 19, 20 of the fluid distribution element 1. The connecting block 8 can be arranged at an end of a row of consecutive fluid distribution elements 1.

The fluid distribution element 1 can be made of a casting. The material of the fluid distribution element 1 can be cast iron or cast steel. The fluid channels 11, 12, 13, 14, 15, 16, 17, 18, 19, 20 and the branches 11c, 13c, 14c, 16c, 17c, 20c of the fluid channels can be made by drilling. Alternatively, some of the fluid channels can be casted. For instance, the air channel 11 can be casted and the other fluid channels drilled. Some fluid channels, such as the channels intended for fuel or lube oil require a better surface quality and need to be drilled. The surfaces comprising inlets and/or outlets for the fluid channels are machined surfaces.

It will be appreciated by a person skilled in the art that the invention is not limited to the embodiments described above, but may vary within the scope of the appended claims.

## Claims

1. A fluid distribution element (1) for an internal combustion engine, the fluid distribution element (1) comprising at least two fluid channels (11, 12, 13, 14, 15, 16, 17, 18, 19, 20) from the following group:
- air channel (11) for starting air or for an air assist system,
- water channel (12) for introducing water into combustion chambers,
- fuel return channel (13) for liquid fuel,
- VIC oil channel (14) for hydraulic medium used for variable intake valve timing,
- fuel leakage channel (16) for liquid fuel,
- VEC oil channel (17) for hydraulic medium used for variable exhaust valve timing, and
- lube oil channel (20),
the fluid distribution element (1) further comprising a fluid connection (11d, 13d, 14d, 16d, 17d, 20d) from at least one of the fluid channels belonging to the group of air channel (11), water channel (12), fuel return channel (13), VIC oil channel (14), fuel leakage channel (16), VEC oil channel (17) and lube oil channel (20) to a cylinder head (5) of an engine,
wherein the fluid distribution element (1) has a first end surface (1a) and a second end surface (1b),
**characterized in that** the fluid distribution element is made of a casting and the first end surface (1a) is configured to be connected to a second end surface (1b) of an identical fluid distribution element (1) and the second end surface (1b) is configured to be connected to a first end surface (1a) of another identical fluid distribution element (1), and that each end surface (1a, 1b) of the fluid distribution element (1) is provided with at least two openings (11a, 12a, 13a, 14a, 15a, 16a, 17a, 18a, 19a, 20a, 11b, 12b, 13b, 14b, 15b, 16b, 17b, 18b, 19b, 20b), each of the openings forming an inlet or an outlet of a fluid channel (11, 12, 13, 14, 15, 16, 17, 18, 19, 20).

2. A fluid distribution element (1) according to claim 1, wherein the fluid distribution element (1) comprises as separate fluid channels each fluid channel from the following group:
- air channel (11) for starting air or air assist system,
- fuel return channel (13) for liquid fuel,
- VIC oil channel (14) for hydraulic medium used for variable intake valve timing,
- fuel leakage channel (16) for liquid fuel,
- VEC oil channel (17) for hydraulic medium used for variable exhaust valve timing, and
- lube oil channel (20).

3. A fluid distribution element (1) according to claim 2, wherein the fluid distribution element (1) comprises a fluid connection (11d, 13d, 14d, 16d, 17d, 20d) from each of the fluid channels belonging to the group of air channel (11), fuel return channel (13), VIC oil channel (14), fuel leakage channel (16), VEC oil channel (17) and lube oil channel (20) to a cylinder head (5) of an engine.

4. A fluid distribution element (1) according to any of the preceding claims, wherein at least one of the fluid channels (11, 12, 13, 14, 15, 16, 17, 18, 19, 20) is provided with a branch (11c, 13c, 14c, 16c, 17c, 20c) for connecting the fluid channel to a cylinder head (5).

5. A fluid distribution element (1) according to claim 4, wherein the branch (11c, 13c, 14c, 16c, 17c, 20c) is provided with an inlet or outlet (11d, 13d, 14d, 16d, 17d, 20d) opening to an upper surface of the fluid distribution element (1).

6. A fluid distribution element (1) according to any of the preceding claims, wherein the fluid distribution element (1) is configured to be attached to an engine block (7).

7. A piston engine comprising a plurality of cylinders, each cylinder being provided with an own cylinder head (5), wherein each cylinder head (5) of the engine is connected to a fluid distribution element (1) according to any of the preceding claims.

## Patentansprüche

1. Fluidverteilungselement (1) für einen Verbrennungsmotor, wobei das Fluidverteilungselement (1) mindestens zwei Fluidverteilungskanäle (11, 12, 13, 14, 15, 16, 17, 18, 19, 20) aus der folgenden Gruppe umfasst:
- Luftkanal (11) zum Starten des Luft- oder Luftunterstützungssystems,
- Wasserkanal (12) zum Einleiten von Wasser in Brennkammern,
- Kraftstoffrücklaufkanal (13) für flüssigen Kraftstoff,
- VIC-Ölkanal (14) für Hydraulikmedium, das zur variablen Einlassventilsteuerung verwendet wird,
- Kraftstoffleckkanal (16) für flüssigen Kraftstoff,
- VEC-Ölkanal (17) für Hydraulikmedium, das zur variablen Auslassventilsteuerung verwendet wird, und
- Schmierölkanal (20),
wobei das Fluidverteilungselement (1) ferner eine Fluidverbindung (lld, 13d, 14d, 16d, 17d, 20d) von mindestens einem der Fluidkanäle, die zur Gruppe von Luftkanal (11), Wasserkanal (12), Kraftstoffrücklaufkanal (13), VIC-Ölkanal (14), Kraftstoffleckkanal (16), VEC-Ölkanal (17) und Schmierölkanal (20) gehören, zu einem Zylinderkopf (5) eines Motors umfasst,
wobei das Fluidverteilungselement (1) eine erste Endfläche (1a) und eine zweite Endfläche (1b) aufweist, **dadurch gekennzeichnet, dass** das Fluidverteilungselement aus einem Gussstück besteht und die erste Endfläche (1a) konfiguriert ist, um mit einer zweiten Endfläche (1b) eines identischen Fluidverteilungselements (1) verbunden zu werden, und die zweite Endfläche (1b) konfiguriert ist, um mit einer ersten Endfläche (1a) eines anderen identischen Fluidverteilungselements (1) verbunden zu werden, und dass jede Endfläche (1a, 1b) des Fluidverteilungselements (1) mit mindestens zwei Öffnungen (11a, 12a, 13a, 14a, 15a, 16a, 17a, 18a, 19a, 20a, 11b, 12b, 13b, 14b, 15b, 16b, 17b, 18b, 19b, 20b) versehen ist, wobei jede der Öffnungen einen Einlass oder einen Auslass eines Fluidkanals (11, 12, 13, 14, 15, 16, 17, 18, 19, 20) bildet.

2. Fluidverteilungselement (1) nach Anspruch 1, wobei das Fluidverteilungselement (1) als separate Fluidkanäle jeden Fluidkanal aus der folgenden Gruppe umfasst:
- Luftkanal (11) zum Starten des Luft- oder Luftunterstützungssystems,
- Kraftstoffrücklaufkanal (13) für flüssigen Kraftstoff,
- VIC-Ölkanal (14) für Hydraulikmedium, das zur variablen Einlassventilsteuerung verwendet wird,
- Kraftstoffleckkanal (16) für flüssigen Kraftstoff,
- VEC-Ölkanal (17) für Hydraulikmedium, das zur variablen Auslassventilsteuerung verwendet wird, und
- Schmierölkanal (20).

3. Fluidverteilungselement (1) nach Anspruch 2, wobei das Fluidverteilungselement (1) eine Fluidverbindung (lld, 13d, 14d, 16d, 17d, 20d) von jedem der Fluidkanäle, die zu der Gruppe von Luftkanal (11), Kraftstoffrücklaufkanal (13), VIC-Ölkanal (14), Kraftstoffleckkanal (16), VEC-Ölkanal (17) und Schmierölkanal (20) gehören, zu einem Zylinderkopf (5) eines Motors umfasst.

4. Fluidverteilungselement (1) nach einem der vorhergehenden Ansprüche, wobei mindestens einer der Fluidkanäle (11, 12, 13, 14, 15, 16, 17, 18, 19, 20) mit einem Abzweig (11c, 13c, 14c, 16c, 17c, 20c) zum Verbinden des Fluidkanals mit einem Zylinderkopf (5) versehen ist.

5. Fluidverteilungselement (1) nach Anspruch 4, wobei der Abzweig (11c, 13c, 14c, 16c, 17c, 20c) mit einer Öffnung des Einlasses oder Auslasses (lld, 13d, 14d, 16d, 17d, 20d) zu einer oberen Oberfläche des Fluidverteilungselements (1) versehen ist.

6. Fluidverteilungselement (1) nach einem der vorhergehenden Ansprüche, wobei das Fluidverteilungselement (1) konfiguriert ist, um an einem Motorblock (7) angebracht zu werden.

7. Kolbenmotor mit einer Vielzahl von Zylindern, wobei jeder Zylinder mit einem eigenen Zylinderkopf (5) versehen ist, wobei jeder Zylinderkopf (5) des Motors mit einem Fluidverteilungselement (1) gemäß einem der vorhergehenden Ansprüche verbunden ist.

## Revendications

1. Élément de distribution de fluide (1) pour un moteur à combustion interne, l'élément de distribution de fluide (1) comprenant au moins deux canaux de fluide (11, 12, 13, 14, 15, 16, 17, 18, 19, 20) à partir du groupe suivant :
- un canal d'air (11) destiné à l'air de démarrage ou au système assisté par air,
- un canal d'eau (12) destiné à introduire de l'eau dans des chambres de combustion,
- un canal de retour de carburant (13) destiné au carburant liquide,
- un canal d'huile VIC (14) destiné au milieu hydraulique utilisé pour le calage variable de soupape d'admission,
- un canal de fuite de carburant (16) destiné au carburant liquide,
- un canal d'huile VEC (17) destiné au milieu hydraulique utilisé pour le calage variable de soupape d'échappement, et
- un canal d'huile de lubrification (20),
l'élément de distribution de fluide (1) comprenant en outre une liaison de fluide (11d, 13d, 14d, 16d, 17d, 20d) à partir d'au moins l'un des canaux de fluide appartenant au groupe de canal d'air (11), de canal d'eau (12), de canal de retour de carburant (13), de canal d'huile VIC (14), de canal de fuite de carburant (16), de canal d'huile VEC (17) et de canal d'huile de lubrification (20) vers une culasse (5) d'un moteur, dans lequel l'élément de distribution de fluide (1) a une première surface d'extrémité (1a) et une seconde surface d'extrémité (1b),
**caractérisé en ce que** l'élément de distribution de fluide est constitué d'un moulage et la première surface d'extrémité (1a) est configurée pour être reliée à une seconde surface d'extrémité (1b) d'un élément de distribution de fluide (1) identique et la seconde surface d'extrémité (1b) est configurée pour être reliée à une première surface d'extrémité (1a) d'un autre élément de distribution de fluide (1) identique, et **en ce que** chaque surface d'extrémité (1a, 1b) de l'élément de distribution de fluide (1) est pourvue d'au moins deux ouvertures (11a, 12a, 13a, 14a, 15a, 16a, 17a, 18a, 19a, 20a, 11b, 12b, 13b, 14b, 15b, 16b, 17b, 18b, 19b, 20b), chacune des ouvertures formant une entrée ou une sortie d'un canal de fluide (11, 12, 13, 14, 15, 16, 17, 18, 19, 20).

2. Élément de distribution de fluide (1) selon la revendication 1, dans lequel l'élément de distribution de fluide (1) comprend comme canaux de fluide séparés chaque canal de fluide à partir du groupe suivant :
- un canal d'air (11) destiné à l'air de démarrage ou au système assisté par air,
- un canal de retour de carburant (13) destiné au carburant liquide,
- un canal d'huile VIC (14) destiné au fluide hydraulique utilisé pour le calage variable de soupape d'admission,
- un canal de fuite de carburant (16) destiné au carburant liquide,
- un canal d'huile VEC (17) destiné au milieu hydraulique utilisé pour le calage variable de soupape d'échappement, et
- un canal d'huile de lubrification (20).

3. Élément de distribution de fluide (1) selon la revendication 2, dans lequel l'élément de distribution de fluide (1) comprend une liaison de fluide (11d, 13d, 14d, 16d, 17d, 20d) à partir de chacun des canaux de fluide appartenant au groupe de canal d'air (11), de canal de retour de carburant (13), de canal d'huile VIC (14), de canal de fuite de carburant (16), de canal d'huile VEC (17) et de canal d'huile de lubrification (20) vers une culasse (5) d'un moteur.

4. Élément de distribution de fluide (1) selon l'une quelconque des revendications précédentes, dans lequel au moins l'un des canaux de fluide (11, 12, 13, 14, 15, 16, 17, 18, 19, 20) est pourvu d'une ramification (11c, 13c, 14c, 16c, 17c, 20c) pour relier le canal de fluide à une culasse (5).

5. Élément de distribution de fluide (1) selon la revendication 4, dans lequel la ramification (11c, 13c, 14c, 16c, 17c, 20c) est pourvue d'une ouverture d'entrée ou de sortie (11d, 13d, 14d, 16d, 17d, 20d) vers une surface supérieure de l'élément de distribution de fluide (1).

6. Élément de distribution de fluide (1) selon l'une quelconque des revendications précédentes, dans lequel l'élément de distribution de fluide (1) est configuré pour être fixé à un bloc moteur (7).

7. Moteur à pistons comprenant une pluralité de cylindres, chaque cylindre étant pourvu d'une culasse (5) propre, dans lequel chaque culasse (5) du moteur est reliée à un élément de distribution de fluide (1) selon l'une quelconque des revendications précédentes.
